# EUROPEAN PATENT SPECIFICATION

(11) **EP 1 481 588 B1**
(45) Date of publication and mention of the grant of the patent: **31.10.2007**
(21) Application number: 03257976.5
(22) Date of filing: 17.12.2003
(51) Int. Cl.: A21B 7/00

(54) **Bread maker and control method thereof**
Brotbackmaschine und Steuerverfahren dafür
Machine de fabrication de pain et son procédé de commande

(30) Priority: 07.05.2003 KR 2003029069
(43) Date of publication of application: 01.12.2004
(73) Proprietor: SAMSUNG ELECTRONICS CO., LTD., Suwon-City, Kyungki-do (KR)
(72) Inventor: Sung, Han-jun, Paldal-ku, Suwon-city Kyungki-do (KR); Kwon, Yong-hyun, Paldal-ku, Suwon-city Kyungki-do (KR); Kim, Chul, Dongan-ku, Anyang city Kyungki-do (KR); Lee, Tae-uk, Changan-ku, Suwon city Kyungki-do (KR); Park, Jae-ryong, Paldal-ku, Suwon city Kyungki-do (KR); Lee, Jang-woo, Paldal-ku, Suwon city Kyungki-do (KR); Lim, Dong-bin, Paldal-ku, Suwon city Kyungki-do (KR)
(74) Representative: Brandon, Paul Laurence

(56) References cited:
- EP-A- 1 357 504
- WO-A-99/53766
- US-A- 4 903 587
- US-A- 4 984 512
- US-A- 5 590 585
- US-A1- 2002 083 845
- US-B1- 6 196 113

## Description

The present invention relates to bread makers and to control methods thereof, and more particularly, but not exclusively, to bread makers and to control methods thereof performing a plurality of bread making processes at respectively different temperatures during respectively predetermined processing times.

Generally, once a user puts ingredients to make bread in the bread maker, a bread maker provides fresh bread to the user by automatically performing kneading, leavening, and baking of bread dough. For example, a bread maker disclosed in Korean Patent First Publication No. 1988-7000638 includes a pair of parallel kneading drums at upper and lower parts of an oven compartment that reverse rotary direction periodically, a baking tray between the pair of kneading drums, a heater heating the inside of the oven compartment, a bar code reader, etc.

The bread maker winds opposite ends of a mixing bag filled with the ingredients, such as dough and water, on the kneading drums, and kneads the ingredients in the mixing bag by moving the mixing bag up and down during a predetermined time period.

When the kneading process is completed, a cutting unit cuts the mixing bag, so that only kneaded ingredients are left in the baking tray. The kneaded ingredients are leavened and baked by heat generated from the heater, so that bread is made in the baking tray.

A series of bread making processes are performed as follows. A bar code scanner reads a bar code, which includes information of a bread making program, such as a kneading time, a leavening time and a baking time and is attached on the mixing bag and transmits the read information of the bread making program to a controller. The controller controls operation of components of the bread maker, such as the kneading drums and the heater, according to the read information of the bar code.

According to a conventional bread maker described above, only one heater is provided, and there is a difficulty in making an optimum product by turning the single heater on and off accordingly.

WO 99/53766 A discloses a versatile food appliance including a set of hardware components common to a plurality of single-purpose food appliances. The set of hardware components is controlled by a microcontroller executing a program from a repertoire thereof stored in the general-purpose food appliance. Many processing programs are stored for operating the appliance in different modes and for processing different kinds of food by using different ingredients. Each processing program is assigned a code and can be selected by specifying the code associated with it from a control panel. The programs may be further modified parametrically by a group of process parameters. Ingredients to be used in each of the programs may be in a premixed form in a package with the code optionally labeled thereon. The repertoire of programs is updatable by the user. In the preferred embodiment, a memory card interface allows updated programs to be introduced via a removable flash memory card.

It is an aim of preferred embodiments of the present invention to provide a bread maker and a control method thereof to accurately control temperature and obtain an optimum product by maintaining temperature of the oven compartment at a predetermined processing temperature by adjusting heating powers of a plurality of heaters.

According to the present invention in a first aspect, there is provided a bread maker performing a plurality of bread making processes, in an oven compartment, which accommodates ingredients to make bread, at respective processing temperatures during predetermined processing times, comprising:
a plurality of heaters requiring variable independently supplied driving powers heating the ingredients, to make the bread, in different directions from each other, wherein the plurality of heaters comprises:
   an upper oven heater and an upper door heater in upper parts of an inside wall of the oven compartment (10),
   a lower oven heater and a lower door heater in lower parts of the inside walls of the oven compartment (10), and
   a door to open and close an front opening of the oven compartment, wherein
   the upper oven heater and the upper door heater heat front and back areas of the upper the of the oven compartment, and
   the lower oven heater and the lower door heater heat front and back areas of the lower parts of the oven compartment;
a heater driving part independently supplying a driving power to each heater and to control a heating power of each heater;
a temperature sensor detecting a temperature of the oven compartment;
a process condition storing part storing process condition data including the processing times and the processing temperatures of the plurality of bread making processes; and
a controller controlling the heater driving part to maintain temperature of the oven compartment at the processing temperature by independently controlling the heating power of each heater according to the temperature detected by the temperature sensor and the process condition data of the process condition storing part.

Preferably, the controller controls the temperature of the oven compartment, thereby optimizing the bread making processes.

Preferably, the controller controls the heater driving part to turn the upper oven heater, the upper door heater, the lower oven heater, and the lower door heater off during a kneading process.

Preferably, the controller controls the heater driving part to decrease the heating powers of the upper oven heater and the upper door heater and to relatively increase the heating powers of the lower oven heater and the lower door heater according to the heating powers of the upper oven heater and the upper door heater during a leavening process.

Preferably, the controller controls the heater driving part so that the heating powers of the upper oven heater and the upper door heater are turned off and duties of the lower oven heater and the lower door heater are about 10 through 40% during the leavening process.

Preferably, the controller controls the heater driving part to increase the heating powers of the upper oven heater and the upper door heater and to relatively decrease the heating powers of the lower oven heater and the lower door heater according to the heating powers of the upper oven heater and the upper door heater during a baking process

Preferably, the controller controls the heater driving part so that duties of the heating powers of the upper oven heater and the upper door heater are about 80 through 100% and duties of the lower oven heater and the lower door heater are about 70 through 90% during the baking process.

Preferably, the controller effectively controls the heater in the upper portion of the oven and the upper portion of the door to provide heat to the extent that the ingredients do not burn.

According to the invention in a second aspect, there is provided a method to control a bread maker according to the first aspect, in which a plurality of heaters are independently controlled to heat ingredients to make bread from various directions, performing a plurality of bread making processes in different processing temperatures from each other during predetermined processing times;
storing process condition data of the bread;
sensing temperature of an oven compartment;
controlling a heater driving part to maintain temperature of the oven compartment.

Preferably, the plurality of heaters comprise:
an upper oven heater and an upper door heater in upper parts of an inside wall of the oven compartment;
a lower oven heater and a lower door heater in lower parts of the inside walls of the oven compartment ; and
a door to open and close an front opening of the oven compartment, wherein
the upper oven heater and the upper door heater heat front and back areas of an upper portion of the oven compartment, and
the lower oven heater and the lower door heater heat front and back areas of a lower part of the oven compartment.

Preferably, the controller controls the heater driving part to turn the upper oven heater, the upper door heater, the lower oven heater, and the lower door heater off during a kneading process.

Preferably, wherein the controller controls the heater driving part to decrease the heating powers of the upper oven heater and the upper door heater and to relatively increase the heating powers of the lower oven heater and the lower door heater according to the heating powers of the upper oven heater and the upper door heater during a leavening process.

Preferably, the controller controls the heater driving part to increase the heating powers of the upper oven heater and the upper door heater and to relatively decrease the heating powers of the lower oven heater and the lower door heater according to the heating powers of the upper oven heater and the upper door heater during a baking process.

Preferably, the method further comprises:
inputting process condition data relating to the bread being made;
inputting a detected temperature of the bread maker; and
controlling the heater to maintain the temperature of the bread maker according to the inputted process condition data.

Preferably, the method further comprising providing a mixing bag having a bar code registered with data of processing times and processing temperatures for use with the mixing bag.

Preferably, the storing comprises receiving the process condition data of the bread through a bar code reader.

Preferably, the sensing comprises receiving the temperature detected by a temperature sensor.

Preferably, the controlling comprises comparing the temperature in the oven compartment with the process condition data.

According to the present invention in a third aspect there is provided a method of operating a bread maker according to the first aspect, in which a plurality of heaters are provided to be independently controlled, to make bread from ingredients contained in mixing bag, which is accommodated in the bread maker, comprising;
inputting process condition data relating to the bread being made;
inputting a detected temperature of the bread maker; and
controlling the heater to maintain the temperature of the bread maker according to the inputted process condition data.

Additional features of the present invention are set out in the appended claims.

The present invention will become apparent and more readily appreciated from the following description of the embodiments, by way of example only, taken in conjunction with the accompany drawings of which:
FIG. 1 is a perspective view of a bread maker according to an embodiment of the present invention;
FIG. 2 is a sectional view illustrating a state that a bar code on a mixing bag is read, taken along a line II-II in FIG. 1;
FIG. 3 is a control block of the bread maker according to the present invention;
FIGS. 4 and 5 are exemplary views illustrating duty adjustment of heaters in respective processes.
FIG. 6 is a control flowchart of the bread maker according to the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

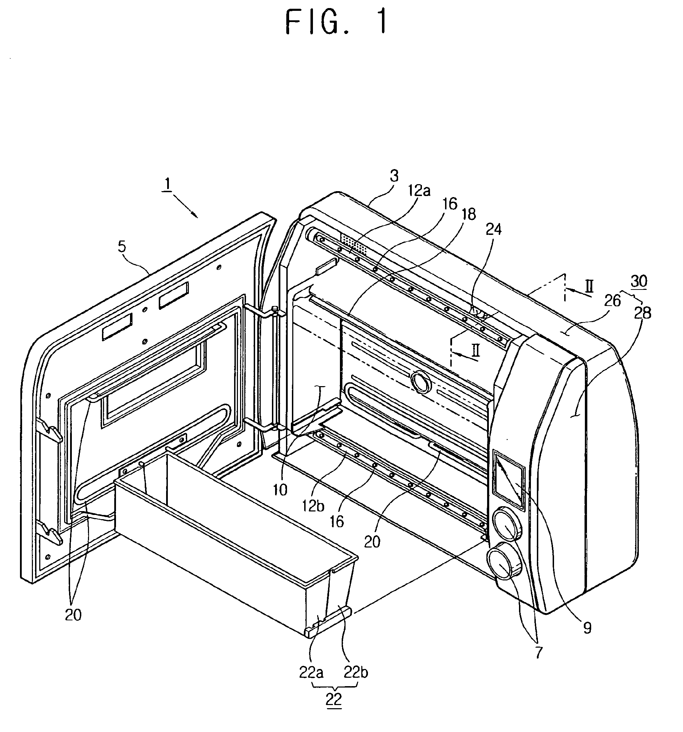

FIG. 1 is a perspective view of a bread maker according to an embodiment of the present invention. As shown in FIG. 1, the bread maker according to this embodiment of the present invention includes a main body 1 forming an oven compartment 10 having a box shape, a door 5 in the front of the main body 1 to open and close a front opening of the oven compartment 10, a control panel 7 in the front of the main body 1 to select an operation of the bread maker, and a displayer 9 to display data, such as operation states of the bread maker 1.

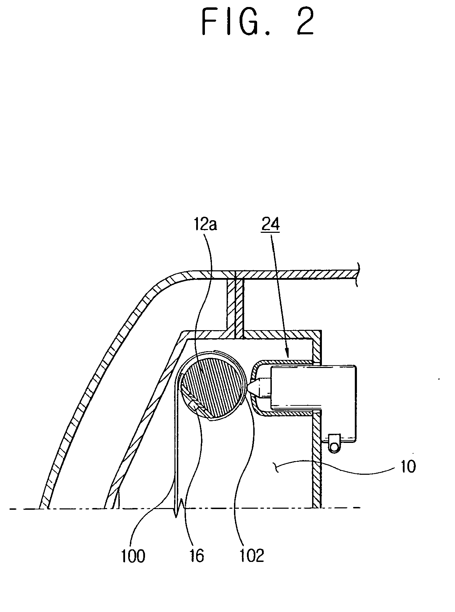

Inside the oven compartment 10, upper and lower kneading drums 12a and 12b are provided in parallel and reverse rotary direction periodically, onto which opposite ends of a mixing bag 100 (refer to FIG. 2) filled with raw materials (ingredients) to make bread are attached and wound. In a lower part of the oven compartment 10, a baking tray 22, which contains the dough for baking, is provided between the upper and lower kneading drums 12a and 12b.

The baking tray 22 includes first and second trays 22a and 22b having "L"-shaped cross sections symmetrical to one another. The first and second trays 22a and 22b combine to form a box having a top opening. In an upper part of the oven compartment 10, a pair of kneading members 18 provided between the upper kneading drum 12a and the baking tray 22 prevents the dough kneaded in the mixing bag 100 from moving beyond the baking tray 22 toward the upper kneading drum 12a. Holders 16 are provided in one side of the kneading drums 12a and 12b in a line along a lengthwise direction of the kneading drums 12a and 12b and have projection shapes. The holders 16 hold opposite ends of the mixing bag 100 filled with the ingredients and make the mixing bag 100 unmovable.

At upper parts of the inside walls of the oven compartment 10 and the door 5, an upper oven heater and an upper door heater to heat front and back areas of an upper part of the baking tray 22 are provided. At lower parts of the inside walls of the oven compartment 10 and the door 5, a lower oven heater and a lower door heater to heat front and back areas of a lower part of the baking tray 22 are provided.

A component compartment 30 includes a first component compartment 28 formed in one side of the oven compartment 10 and a second component compartment 26 formed in a rear of the oven compartment 10. Inside the first component compartment 28, a drum driving part (not shown) rotating the upper and lower kneading drums 12a and 12b in clockwise and counterclockwise directions is provided. Inside the second component compartment 26, a bar code reader 24 that reads a bar code 102 (refer to FIG. 2) printed on, or attached on, the mixing bag 100, which is wound on the upper and lower kneading drums 12a and 12b is provided. The bar code is registered with processing condition data of processing times and processing temperature, for example, a production date, a bread making program and ingredient information such as a kneading time, a leavening time and temperature, a baking time and temperature, vaporization, etc.

FIG. 2 is a sectional view illustrating a state that a bar code on a mixing bag is read, taken along a line II-II in FIG. 1. To input the bar code information to the bread maker 1, the kneading drums 12 are rotated by manipulation of the control panel 7 after the mixing bag 100 is attached to the holders 16 of the kneading drums 12. If one end of the mixing bag 100 is wound on the kneading drums 12 by the rotation of the kneading drums 12, the bar code 12 contacts a bar code sensor of the bar code reader 24 provided in a back of the kneading drums 12. The bar code reader 24 reads the bar code 102 attached on the mixing bag 100.

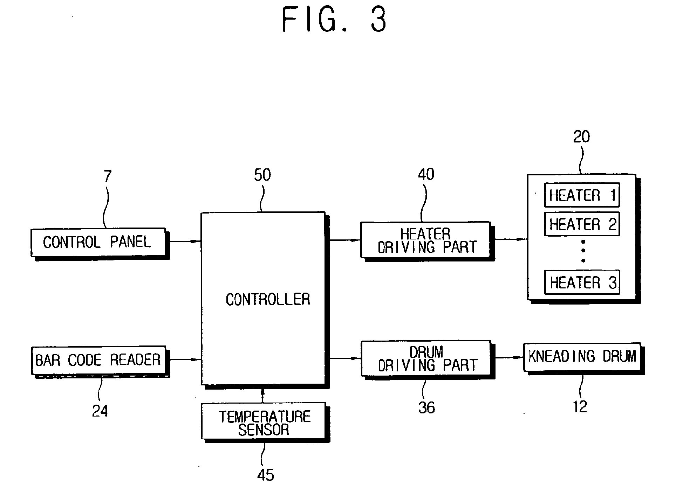

Also, the bread maker according to this embodiment of the present invention, as shown in FIG. 3, further comprises a temperature sensor 45 sensing a temperature of the oven compartment, and a controller 50 performs a control function.

The temperature sensor 45 is a sensor, such as a thermistor, and transmits a temperature sensing signal of the oven compartment 10 to the controller 50.

If a user selects a bar code input by using the control panel 7, the controller 50 controls the drum driving part 36 to supply a driving power to a driving motor of the kneading drums 12, and causes the mixing bag 100 attached on the kneading drums 12 to be wound by driving the kneading drums 12. As the mixing bag 100 is wound on the kneading drums 12, the bar code 102 on the mixing bag 100 is read through the bar code reader 24. The controller 50 kneads the ingredients filled in the mixing bag 100 by controlling the drum driving part 36 to drive the kneading drums 12 according to the bread making information of the kneading time, the leavening time and temperature, the baking time and temperature, vaporization, etc., which is inputted through the bar code reader 24. The controller 50 performs leavening and baking processes by supplying a driving power to a plurality of heaters 20 through a heater driving part 40 and controls the heating power of the plurality of heaters 20. Herein, the heating powers of the plurality of heaters 20 can be controlled by control of duties of the plurality of heaters 20.

The controller 50 is provided so that the temperature of the oven compartment, detected by the temperature sensor 45, is maintained in a setup temperature registered in the bar code 102, and respectively controls the duties of the respective plurality of heaters 20 provided in different positions by controlling on/off periods of switching devices (not shown) provided in the temperature sensor 45 and connected to the respective plurality of heaters 20.
When the controller 50 determines that the temperature sensed by the temperature sensor 45 reaches the setup temperature, the controller 50 controls the heater driving part 40 to end the heating of the plurality of heaters 20. Although the temperature of the oven compartment 10 reaches the setup temperature, the controller 50 continuously receives information of the temperature of the oven compartment 10 through the temperature sensor 45 during the bread making process because the temperature may vary during the process. That is, the controller 50 controls the temperature of the oven compartment 10 to maintain the setup temperature by feedback of the sensed temperature.

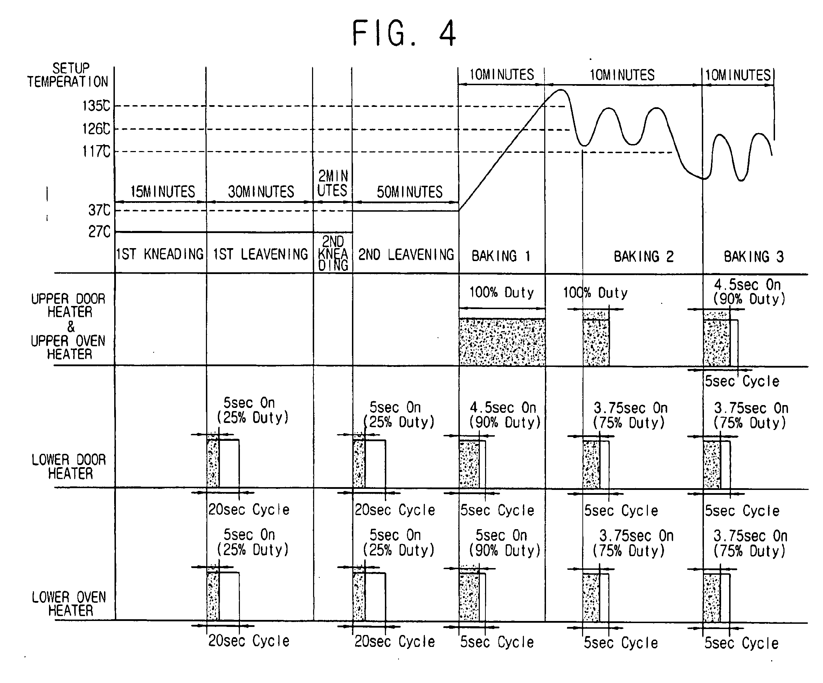

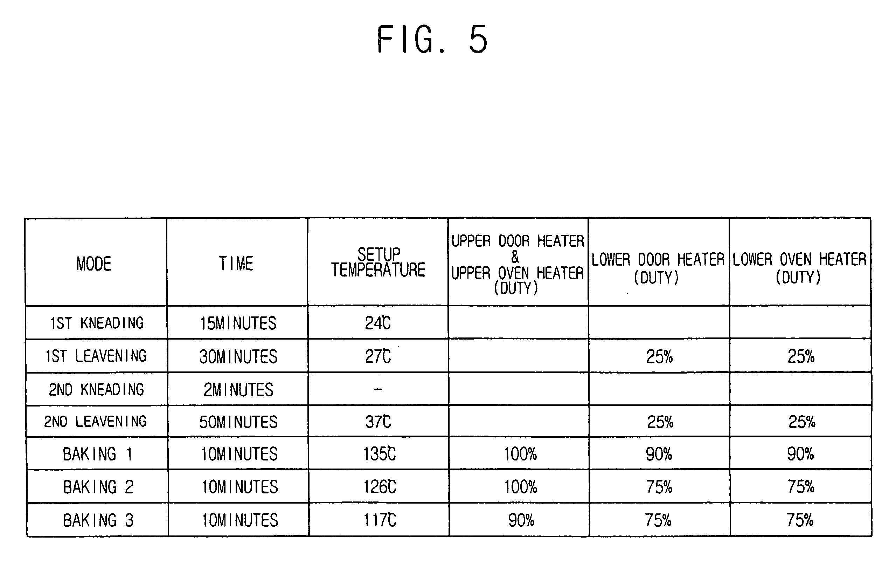

Duty control in each process is described as follows, with reference to FIGS. 4 and 5. As shown in FIG. 4 and 5, since the kneading is conventionally performed within about 20 through 25°C, the heating of the plurality of heaters 20 is not required. Thus, the controller 50 determines that the sensed temperature of the oven compartment 10 is similar to the setup temperature in a kneading mode, and controls the heater driving part 40 to cause the plurality of heaters 20 to be turned off.

In a leavening mode, the temperature of the oven compartment reaches the setup temperature in the leavening mode by causing only the lower door heater and the lower oven heater to be heated at about a 25% duty. This is because the upper door heater and upper oven heater are positioned to directly heat the kneaded ingredients in the leavening, so that the kneaded ingredients can be burned.

The controller 50 operates all of the plurality of heaters 20 in a baking mode, and causes the temperature of the oven compartment 10 to reach the setup temperature in the baking mode by controlling the heater driving part 40 to adjust duties of the upper oven heater and the upper door heater to be higher than that of the lower oven heater and the lower door heater. That is, bread is baked in an optimum state by adjusting heating powers of the plurality of heaters 20 in different positions, for example, by applying relatively large heat to the upper part of the bread where the color of the bread is formed.

As described above, the duties of the plurality of heaters 20 in different positions are adjusted in each process, so that the temperature of the oven compartment 10 reaches the setup temperature registered in the bar code 102. The heating powers of the plurality of heaters 20 in different positions can be adjusted. Thus, an accurate temperature control is performed and the kneaded ingredients are heated in an optimum state in different positions.

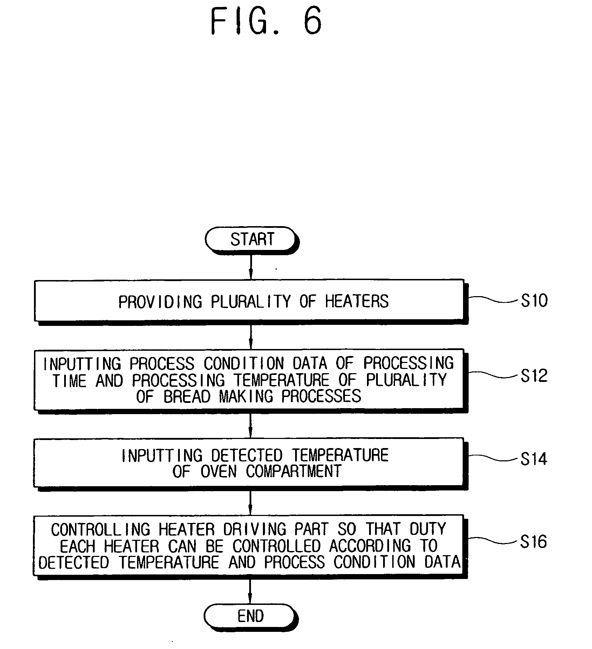

A flow diagram of the bread maker 1 with the above configuration is described as follows with reference to FIG. 6. As shown in FIG. 6, at first, the plurality of heaters 20 are provided in different positions from each other (100). The mixing bag 100, having the bar code 102 registered with data of the processing time and processing temperature of a plurality of bread making processes, is provided. When a user starts to make bread by using the bread maker 1, he/she inputs the data of the bar code 102 to the bread maker 1 by allowing the mixing bag 100 to be wound on the kneading drum 12. The controller 50 receives the data of the bar code 102 on the mixing bag 100 through the bar code reader 24 (122), and receives a temperature detected by the temperature sensor 45 (144).

The controller 50 compares the temperature detected by the temperature sensor 45 with the setup temperature of each process in the bar code data, and controls the heater driving part 40 so that the duties of the plurality of heaters 20 can be controlled (166). Thus, an optimum quality of bread can be obtained through an accurate temperature control.

In the above embodiment, the plurality of heaters 20 are provided in the upper and lower part of the inside wall of the oven compartment 10, and in the upper and lower part of the inside wall of the door 5, but the positions and numbers of the plurality of heaters 20 are not necessarily limited to that of the above embodiment.

In the above embodiment, all of the plurality of heaters 20 are turned off in the kneading process, but the plurality of heaters 20 may be operated when the temperature of the oven compartment 10 does not reach the setup temperature of the kneading mode.

In the above embodiment, only the lower oven heater and the lower door heater are heated in the leavening mode, but the upper oven heater and the lower door heater may be heated with a predetermined duties to an extent that the kneaded ingredients are not burned.

In the above embodiment, the heating power of the upper oven heater and the upper door heater are increased in the baking process, and the lower oven heater and the lower door heater are relatively decreased, but different embodiments can be applied.

As described above, according to this embodiment of the present invention, the oven temperature reaches processing temperature by respectively adjusting the duties of the plurality of heaters. Accordingly, an optimum product is made through these operations.

As described above, according to a preferred embodiment of the present invention, a bread maker and a control method thereof is provided to accurately control temperature and obtain an optimum product by maintaining temperature of the oven compartment at a processing temperature by adjusting heating powers of a plurality of heaters.

Although a few embodiments of the present invention have been shown and described, it will be appreciated by those skilled in the art that changes may be made in these embodiments without departing from the principles and the scope of which is defined in the appended claims and their equivalents.

## Claims

1. A bread maker performing a plurality of bread making processes, in an oven compartment (10), which accommodates ingredients to make bread, at respective processing temperatures during predetermined processing times, comprising:
a plurality of heaters (20) requiring variable independently supplied driving powers heating the ingredients, to make the bread, in different directions from each other, wherein the plurality of heaters comprises:
an upper oven heater and an upper door heater in upper parts of an inside wall of the oven compartment (10),
a lower oven heater and a lower door heater in lower parts of the inside walls of the oven compartment (10), and
a door (15) to open and close an front opening of the oven compartment (10), wherein
the upper oven heater and the upper door heater heat front and back areas of the upper the of the oven compartment (10), and
the lower oven heater and the lower door heater heat front and back areas of the lower parts of the oven compartment (10);
a heater driving part (40) independently supplying a driving power to each heater (20) and to control a heating power of each heater (20);
a temperature sensor (45) detecting a temperature of the oven compartment (10);
a process condition storing part storing process condition data including the processing times and the processing temperatures of the plurality of bread making processes; and
a controller (50) controlling the heater driving part (40) to maintain temperature of the oven compartment (10) at the processing temperature by independently controlling the heating power of each heater (20) according to the temperature detected by the temperature sensor (45) and the process condition data of the process condition storing part.

2. The bread maker according to claim 1, wherein the controller (50) controls the temperature of the oven compartment (10), thereby optimizing the bread making processes.

3. The bread maker according to claim 2, wherein the controller (50) controls the heater driving part (46) to turn the upper oven heater, the upper door heater, the lower oven heater, and the lower door heater off during a kneading process.

4. The bread maker according to claim 2 or claim 3, wherein the controller (50) controls the heater driving part (40) to decrease the heating powers of the upper oven heater and the upper door heater and to relatively increase the heating powers of the lower oven heater and the lower door heater according to the heating powers of the upper oven heater and the upper door heater during a leavening process.

5. The bread maker according to claim 4, wherein the controller (50) controls the heater driving part (40) so that the heating powers of the upper oven heater and the upper door heater are turned off and duties of the lower oven heater and the lower door heater are about 10 through 40% during the leavening process.

6. The bread maker according to any one of claims 2-5, wherein the controller (50) controls the heater driving part (40) to increase the heating powers of the upper oven heater and the upper door heater and to relatively decrease the heating powers of the lower oven heater and the lower door heater according to the heating powers of the upper oven heater and the upper door heater during a baking process.

7. The bread maker according to claim 6, wherein the controller (50) controls the heater driving (40) part so that duties of the heating powers of the upper oven heater and the upper door heater are about 80 through 100% and duties of the lower oven heater and the lower door heater are about 70 through 90% during the baking process.

8. The bread maker according to any preceding claim, wherein the controller (50) effectively controls the heater in the upper portion of the oven and the upper portion of the door to provide heat to the extent that the ingredients do not burn.

9. A method to control a bread maker according to any one of claims 1 - 8, in which a plurality of heaters (20) are independently controlled to heat ingredients to make bread from various directions, performing a plurality of bread making processes in different processing temperatures from each other during predetermined processing times;
storing process condition data of the bread;
sensing temperature of an oven compartment;
controlling a heater driving part (40) to maintain temperature of the oven compartment (10).

10. The method according to claim 9, wherein the plurality of heaters (20) comprise:
an upper oven heater and an upper door heater in upper parts of an inside wall of the oven compartment (10);
a lower oven heater and a lower door heater in lower parts of the inside walls of the oven compartment (10); and
a door (5) to open and close an front opening of the oven compartment (10), wherein
the upper oven heater and the upper door heater heat front and back areas of an upper portion of the oven compartment (10), and
the lower oven heater and the lower door heater heat front and back areas of a lower part of the oven compartment (10).

11. The method according to claim 10, wherein the controller (50) controls the heater driving part (40) to turn the upper oven heater, the upper door heater, the lower oven heater, and the lower door heater off during a kneading process.

12. The method according to claim 10, wherein the controller (50) controls the heater driving part (40) to decrease the heating powers of the upper oven heater and the upper door heater and to relatively increase the heating powers of the lower oven heater and the lower door heater according to the heating powers of the upper oven heater and the upper door heater during a leavening process.

13. The method according to claim 10, wherein the controller (50) controls the heater driving part (40) to increase the heating powers of the upper oven heater and the upper door heater and to relatively decrease the heating powers of the lower oven heater and the lower door heater according to the heating powers of the upper oven heater and the upper door heater during a baking process.

14. The method according to claim 9, further comprising providing a mixing bag (100) having a bar code (102) registered with data of processing times and processing temperatures for use with the mixing bag (100).

15. The method according to any one of claims 9 to 14, wherein the storing comprises receiving the process condition data of the bread through a bar code reader (24).

16. The method according to any one of claims 8-15, wherein the sensing comprises receiving the temperature detected by a temperature sensor.

17. The method according to any one of claims 8-16, wherein the controlling comprises comparing the temperature in the oven compartment (10) with the process condition data.

18. A method of operating a bread maker according to any one of claims 1 - 8, in which a plurality of heaters (20) are provided to be independently controlled, to make bread from ingredients contained in a mixing bag (100), which is accommodated in the bread maker, comprising;
inputting process condition data relating to the bread being made;
inputting a detected temperature of the bread maker; and
controlling the heater to maintain the temperature of the bread maker according to the inputted process condition data.

## Patentansprüche

1. Brotbackmaschine, die in einem Backofenraum (10), der die Zutaten zum Brotbacken aufnimmt, eine Vielzahl von Brotbackprozessen bei jeweiligen Verarbeitungstemperaturen während vorgegebener Verarbeitungszeiten ausführt, umfassend:
eine Vielzahl von Heizungen (20), die variable, unabhängig zugeführte Antriebsleistungen erfordern, die die Zutaten, um das Brot zu backen, aus voneinander verschiedenen Richtungen erhitzen, wobei die Vielzahl von Heizungen umfasst:
eine obere Backofenheizung und eine obere Türheizung, in oberen Teilen einer Innenseitenwand des Backofenraums (10),
eine untere Backofenheizung und eine untere Türheizung, in unteren Teilen der Innenseitenwände des Backofenraums (10), und
eine Tür (15) zum Öffnen und Schließen einer Vorderseitenöffnung des Backofenraums (10), wobei
die obere Backofenheizung und die obere Türheizung vordere und hintere Bereiche des oberen Teils des Backofenraums (10) erhitzen und
die untere Backofenheizung und die untere Türheizung vordere und hintere Bereiche der unteren Teile des Backofenraums (10) erhitzen,
einen Heizungsantriebsteil (40), der jeder Heizung (20) unabhängig eine Antriebsleistung zuführt und der eine Heizleistung jeder Heizung (20) regelt,
einen Temperatursensor (45), der eine Temperatur des Backofenraums (10) detektiert,
einen Verarbeitungsbedingungsspeicherteil, der Verarbeitungsbedingungsdaten, einschließlich der Verarbeitungszeiten und der Verarbeitungstemperaturen der Vielzahl von Brotbackprozessen speichert, und
eine Steuereinheit (50), die den Heizungsantriebsteil (40) steuert, um eine Temperatur des Backofenraums (10) auf der Verarbeitungstemperatur vorzuhalten, indem sie die Heizleistung jeder Heizung (20) entsprechend der durch den Temperatursensor (45) detektierten Temperatur und den Verarbeitungsbedingungsdaten des Verarbeitungsbedingungsspeicherteils steuert.

2. Brotbackmaschine nach Anspruch 1, wobei die Steuereinheit (50) die Temperatur des Backofenraums (10) regelt und **dadurch** den Brotbackprozess optimiert.

3. Brotbackmaschine nach Anspruch 2, wobei die Steuereinheit (50) den Heizungsantriebsteil (40) während eines Knetprozesses steuert, um die obere Backofenheizung, die obere Türheizung, die untere Backofenheizung und die untere Türheizung auszuschalten.

4. Brotbackmaschine nach Anspruch 2 oder 3, wobei die Steuereinheit (50) den Heizungsantriebsteil (40) während eines Treibprozesses steuert, um die Heizleistungen der oberen Backofenheizung und der oberen Türheizung zu verringern und die Heizleistungen der unteren Backofenheizung und der unteren Türheizung relativ entsprechend den Heizleistungen der oberen Backofenheizung und der oberen Türheizung zu erhöhen.

5. Brotbackmaschine nach Anspruch 4, wobei die Steuereinheit (50) den Heizungsantriebsteil (40) so steuert, dass während des Treibprozesses die Heizleistungen der oberen Backofenheizung und der oberen Türheizung ausgeschaltet sind und die Auslastungen der unteren Backofenheizung und der unteren Türheizung ungefähr 10% bis 40% sind.

6. Brotbackmaschine nach einem der Ansprüche 2 bis 5. wobei die Steuereinheit (50) den Heizungsantriebsteil (40) steuert, um während eines Backprozesses die Heizleistungen der oberen Backofenheizung und der oberen Türheizung zu erhöhen und die Heizleistungen der unteren Backofenheizung und unteren Türheizung relativ entsprechend den Heizleistungen der oberen Backofenheizung und der Türheizung zu verringern.

7. Brotbackmaschine nach Anspruch 6, wobei die Steuereinheit (50) den Heizungsantriebsteil (40) so steuert, dass während des Backprozesses die Auslastungen der Heizleistungen der oberen Backofenheizung und der oberen Türheizung ungefähr 80% bis 100% sind und die Auslastungen der unteren Backofenheizung und der unteren Türheizung ungefähr 70% bis 90% sind.

8. Brotbackmaschine nach einem der vorhergehenden Ansprüche, wobei die Steuereinheit (50) die Heizung in dem oberen Teil des Backofens und in dem oberen Teil der Tür effektiv so regelt, dass Hitze in dem Ausmaß bereitgestellt wird, dass die Zutaten nicht verbrennen.

9. Verfahren zum Steuern einer Brotbackmaschine nach einem der Ansprüche 1 bis 8, in dem eine Vielzahl von Heizungen (20) unabhängig geregelt wird, um Zutaten zum Brotbacken aus verschiedenen Richtungen zu erhitzen, und eine Vielzahl von Brotbackprozessen bei voneinander verschiedenen Verarbeitungstemperaturen während vorgegebener Verarbeitungszeiten durchgeführt wird,
die Verarbeitungsbedingungsdaten des Brotes gespeichert werden,
die Temperatur eines Backofenraums erfasst wird und
ein Heizungsantriebsteil (40) gesteuert wird, um die Temperatur des Backofenraums (10) vorzuhalten.

10. Verfahren nach Anspruch 9, wobei die Vielzahl von Heizungen (20) umfasst:
eine obere Backofenheizung und eine obere Türheizung, in oberen Teilen einer lnnenseitenwand des Backofenraums (10),
eine untere Backofenheizung und eine untere Türheizung, in unteren Teilen der Innenseitenwände des Backofenraums (10), und
eine Tür (15) zum Öffnen und Schließen einer Vorderseitenöffnung des Backofenraums (10), wobei
die obere Backofenheizung und die obere Türheizung vordere und hintere Bereiche eines oberen Teils des Backofenraums (10) erhitzen und
die untere Backofenheizung und die untere Türheizung vordere und hintere Bereiche eines unteren Teils des Backofenraums (10) erhitzen.

11. Verfahren nach Anspruch 10, wobei die Steuereinheit (50) den Heizungsantriebsteil (40) während eines Knetprozesses steuert, um die obere Backofenheizung, die obere Türheizung, die untere Backofenheizung und die untere Türheizung auszuschalten.

12. Verfahren nach Anspruch 10, wobei die Steuereinheit (50) den Heizungsantriebsteil (40) während eines Treibprozesses steuert, um die Heizleistungen der oberen Backofenheizung und der oberen Türheizung zu verringern und die Heizleistungen der unteren Backofenheizung und der unteren Türheizung relativ entsprechend den Heizleistungen der oberen Backofenheizung und der oberen Türheizung zu erhöhen.

13. Verfahren nach Anspruch 10, wobei die Steuereinheit (50) den Heizungsantriebsteil (40) steuert, um während eines Backprozesses die Heizleistungen der oberen Backofenheizung und der oberen Türheizung zu erhöhen und die Heizleistungen der unteren Backofenheizung und unteren Türheizung relativ entsprechend den Heizleistungen der oberen Backofenheizung und der Türheizung zu verringern.

14. Verfahren nach Anspruch 9, das des Weiteren das Bereitstellen eines Mischbeutels (100) mit einem Barcode (102), in den Daten von Verarbeitungszeiten und Verarbeitungstemperaturen eingetragen sind, die mit dem Mischbeutel (100) anzuwenden sind, umfasst.

15. Verfahren nach einem der Ansprüche 9 bis 14, wobei das Speichern das Empfangen der Verarbeitungsbedingungsdaten des Brotes durch einen Barcodeleser (24) umfasst.

16. Verfahren nach einem der Ansprüche 8 bis 15, wobei das Erfassen das Empfangen der durch einen Temperaturdetektor detektierten Temperatur umfasst.

17. Verfahren nach einem der Ansprüche 8 bis 16, wobei die Steuerung das Vergleichen der Temperatur in dem Backofenraum (10) mit den Verarbeitungsbedingungsdaten umfasst.

18. Verfahren zum Betreiben einer Brotbackmaschine nach einem der Ansprüche 1 bis 8, in dem eine Vielzahl von Heizungen (20) bereitgestellt wird, um unabhängig geregelt zu werden, um Brot aus Zutaten zu backen, die in einem Mischbeutel (100) enthalten sind, der in die Brotbackmaschine aufgenommen ist, wobei das Verfahren umfasst:
Eingeben von Verarbeitungsbedingungsdaten, die sich auf das zu backende Brot beziehen,
Eingeben einer detektierten Temperatur der Brotbackmaschine und
Steuern der Heizung, um eine Temperatur in der Brotbackmaschine entsprechend den eingegebenen Verarbeitungsbedingungsdaten vorzuhalten.

## Revendications

1. Machine à pain effectuant une pluralité de processus pour fabriquer du pain, dans un compartiment de four (10), qui reçoit des ingrédients pour fabriquer du pain, à des températures de traitement respectives pendant des temps de traitement prédéterminés, comprenant :
une pluralité d'éléments de chauffage (20) nécessitant des courants d'entraînement alimentés indépendamment variables chauffant les ingrédients, pour fabriquer du pain, dans des directions différentes les unes des autres, la pluralité des éléments chauffants comprenant :
un élément chauffant de four supérieur et un élément chauffant de porte supérieur dans des parties supérieures d'une paroi intérieure du compartiment de four (10),
un élément chauffant de four inférieur et un élément chauffant de porte inférieur dans des parties inférieures des parois intérieures du compartiment de four (10), et
une porte (15) pour ouvrir et fermer une ouverture avant du compartiment de four (10), dans laquelle
l'élément chauffant de four supérieur et l'élément chauffant de porte supérieur chauffent des zones avant et arrière de la partie supérieure du compartiment de four (10), et
l'élément chauffant de four inférieur et l'élément chauffant de porte inférieur chauffent des zones avant et arrière des parties inférieures du compartiment de four (10) ;
une partie d'entraînement d'élément chauffant (40) alimentant de manière indépendante un courant d'entraînement vers chaque élément chauffant (20) et commandant une puissance de chauffage de chaque élément chauffant (20) ;
un capteur de température (45) détectant une température du compartiment de four (10);
une partie de mémorisation de conditions de traitement mémorisant des données de conditions de traitement comprenant les temps de traitement et les températures de traitement de la pluralité de processus pour fabriquer du pain ; et
un dispositif de commande (50) commandant la partie d'entraînement d'élément chauffant (40) pour maintenir la température du compartiment de four (10) à la température de traitement en commandant de manière indépendante la puissance de chauffage de chaque élément chauffant (20) selon la température détectée par le capteur de température (45) et les données de conditions de traitement de la partie de mémorisation de conditions de traitement.

2. Machine à pain selon la revendication 1, dans laquelle le dispositif de commande (50) commande la température du compartiment de four (10), optimisant ainsi les processus pour fabriquer du pain.

3. Machine à pain selon la revendication 2, dans laquelle le dispositif de commande (50) commande la partie d'entraînement d'élément chauffant (46) pour éteindre l'élément chauffant de four supérieur, l'élément chauffant de porte supérieur, l'élément chauffant de four inférieur et l'élément chauffant de four inférieur pendant un processus de pétrissage.

4. Machine à pain selon la revendication 2 ou la revendication 3, dans laquelle le dispositif de commande (50) commande la partie d'entraînement d'élément chauffant (40) pour diminuer les puissances de chauffage de l'élément chauffant de four supérieur et de l'élément chauffant de porte supérieur et pour augmenter de manière relative les puissances de chauffage de l'élément chauffant de four inférieur et de l'élément chauffant de porte inférieur selon les puissances de chauffage de l'élément chauffant de four supérieur et de l'élément chauffant de porte supérieur pendant un processus de levage.

5. Machine à pain selon la revendication 4, dans laquelle le dispositif de commande (50) commande la partie d'entraînement d'élément chauffant (40) de sorte que les puissances de chauffage de l'élément chauffant de four supérieur et de l'élément chauffant de porte supérieur sont éteintes et les fonctions de l'élément chauffant de four inférieur et de l'élément chauffant de porte inférieur sont d'environ 10 à 40 % pendant le processus de levage.

6. Machine à pain selon l'une quelconque des revendications 2 à 5, dans laquelle le dispositif de commande (50) commande la partie d'entraînement d'élément chauffant (40) pour augmenter les puissances de chauffage de l'élément chauffant de four supérieur et de l'élément chauffant de porte supérieur et pour diminuer de manière relative les puissances de chauffage de l'élément chauffant de four inférieur et de l'élément chauffant de porte inférieur selon les puissances de chauffage de l'élément chauffant de four supérieur et de l'élément chauffant de porte supérieur pendant un processus de cuisson.

7. Machine à pain selon la revendication 6, dans laquelle le dispositif de commande (50) commande la partie d'entraînement d'élément chauffant (40) de sorte que les fonctions des puissances de chauffage de l'élément chauffant de four supérieur et de l'élément chauffant de porte supérieur sont d'environ 80 à 100 % et les fonctions de l'élément chauffant de four inférieur et de l'élément chauffant de porte inférieur sont d'environ 70 à 90 % pendant le processus de cuisson.

8. Machine à pain selon l'une quelconque des revendications précédentes, dans laquelle le dispositif de commande (50) commande de manière effective l'élément chauffant dans la portion supérieure du four et la portion supérieure de la porte pour fournir une chaleur dans une mesure telle que les ingrédients ne brûlent pas.

9. Procédé pour commander une machine à pain selon l'une quelconque des revendications 1 à 8, dans lequel une pluralité de dispositifs de chauffage (20) sont commandés indépendamment pour chauffer des ingrédients pour fabriquer du pain à partir de diverses directions, effectuer une pluralité de processus pour fabriquer du pain à des températures de traitement différentes les unes des autres pendant des temps de traitement prédéterminés ;
mémoriser des données de conditions de traitement du pain ;
détecter la température d'un compartiment de four ;
commander une partie d'entraînement d'élément chauffant (40) pour maintenir la température dans le compartiment de four (10).

10. Procédé selon la revendication 9, dans lequel la pluralité de dispositifs de chauffage (20) comprend :
un élément chauffant de four supérieur et un élément chauffant de porte supérieur dans des parties supérieures d'une paroi intérieure du compartiment de four (10);
un élément chauffant de four inférieur et un élément chauffant de porte inférieur dans des parties inférieures des parois intérieures du compartiment de four (10) ; et
une porte (5) pour ouvrir et fermer une ouverture avant du compartiment de four (10), dans lesquels
l'élément chauffant de four supérieur et l'élément chauffant de porte supérieur chauffent des zones avant et arrière d'une partie supérieure du compartiment de four (10), et
l'élément chauffant de four inférieur et l'élément chauffant de porte inférieur chauffent des zones avant et arrière d'une partie inférieure du compartiment de four (10).

11. Procédé selon la revendication 10, dans lequel le dispositif de commande (50) commande la partie d'entraînement d'élément chauffant (40) pour éteindre l'élément chauffant de four supérieur, l'élément chauffant de porte supérieur, l'élément chauffant de four inférieur et l'élément chauffant de porte inférieur pendant un processus de pétrissage.

12. Procédé selon la revendication 10, dans lequel le dispositif de commande (50) commande la partie d'entraînement d'élément chauffant (40) pour diminuer les puissances de chauffage de l'élément chauffant de four supérieur et de l'élément chauffant de porte supérieur et pour augmenter de manière relative les puissances de chauffage de l'élément chauffant de four inférieur et de l'élément chauffant de porte inférieur selon les puissances de chauffage de l'élément chauffant de four supérieur et de l'élément chauffant de porte supérieur pendant un processus de levage.

13. Procédé selon la revendication 10, dans lequel le dispositif de commande (50) commande la partie d'entraînement d'élément chauffant (40) pour augmenter les puissances de chauffage de l'élément chauffant de four supérieur et de l'élément chauffant de porte supérieur et pour diminuer de manière relative les puissances de chauffage de l'élément chauffant de four inférieur et de l'élément de chauffage de porte inférieur selon les puissances de chauffage de l'élément chauffant de four supérieur et de l'élément chauffant de porte supérieur pendant un processus de cuisson.

14. Procédé selon la revendication 9, comprenant en, outre l'étape consistant à fournir un sachet de mélange (100) ayant un code-barres (102) où sont inscrites des données de temps de traitement et de températures de traitement à utiliser avec le sachet de mélange (100).

15. Procédé selon l'une quelconque des revendications 9 à 14, dans lequel l'étape de mémorisation comprend la réception des données de conditions de traitement du pain par l'intermédiaire d'un dispositif de lecture de code-barres (24).

16. Procédé selon l'une quelconque des revendications 8 à 15, dans lequel l'étape de détection comprend la réception de la température détectée par un capteur de température.

17. Procédé selon l'une quelconque des revendications 8 à 16, dans lequel l'étape de commande comprend la comparaison de la température dans le compartiment de four (10) avec les données de conditions de traitement.

18. Procédé pour faire fonctionner une machine à pain selon l'une quelconque des revendications 1 à 8, dans lequel une pluralité d'éléments chauffants (20) sont fournis pour être commandés de manière indépendante, pour fabriquer du pain à partir d'ingrédients contenus dans un sachet de mélange (100), lequel mélange est reçu dans la machine à pain, comprenant les étapes consistant à :
entrer les données de conditions de traitement concernant le pain à fabriquer ;
entrer une température détectée de la machine à pain ; et
commander l'élément chauffant pour maintenir la température de la machine à pain selon les données de conditions de traitement entrées.
